**Europäisches Patentamt**

**European Patent Office**

**Office européen des brevets**

(11) Numéro de publication: **0 168 750**

**B1**

(12) **FASCICULE DE BREVET EUROPEEN**

(45) Date de publication du fascicule du brevet: **05.09.90**

(51) Int. Cl.⁵: **G 11 B 7/24, B 29 C 65/08**

(21) Numéro de dépôt: **85108474.9**

(22) Date de dépôt: **09.07.85**

(54) **Disque optique protégé à élements soudes.**

(30) Priorité: **10.07.84 FR 8410941**

(43) Date de publication de la demande:
**22.01.86 Bulletin 86/04**

(45) Mention de la délivrance du brevet:
**05.09.90 Bulletin 90/36**

(84) Etats contractants désignés:
**AT DE GB IT NL**

(56) Documents cités:
**EP-A-0 094 273**
**GB-A-2 116 667**

**MACHINE DESIGN, vol. 46, no. 31, 26 décembre 1974, pages 42-44, Cleveland, US; D.R. DREGER: "Welding plastics by vibration"**

**PLASTICS ENGINEERING, vol. 36, no. 8, aou7t 1980, pages 20-23, Manchester, New Hampshire, US; J. MENGASON: "Vibration welding - shaking up the status quo in joining plastics"**

(73) Titulaire: **THOMSON S.A.**
**173, bld Haussmann**
**F-75008 Paris (FR)**

(72) Inventeur: **Lange, François**
**28, rue des Nations Unies**
**F-92160 Antony (FR)**

(74) Mandataire: **Grynwald, Albert et al**
**THOMSON-CSF SCPI**
**F-92045 PARIS LA DEFENSE CEDEX 67 (FR)**

Courier Press, Leamington Spa, England.

**Description**

La présente invention se rapporte aux disques optiques protégés qui contiennent à l'intérieur d'un boitier en plusieurs parties au moins une couche d'emmagasinage de données inscriptible et lisible optiquement.

Comme couche d'emmagasinage de données, on peut utiliser des structures thermodéformables produisant une inscription en relief par marquage superficiel du moyen d'un rayonnement laser incident finement focalisé. L'inscription en relief peut consister soit en une altération par ablation, soit en une protubérance arrondie. On peut également envisager un marquage sans relief dans des couches photosensibles à base de matériaux argentiques ou diazotypes. Il est encore envisageable d'utiliser des couches magnétiques ou métalliques dans lesquelles le marquage consiste en un changement de phase, consécutif à une inscription thermooptique.

Toutes ces couches ont en commun une grande vulnérabilité aux agents extérieurs et réclament une protection appropriée obtenue en les enfermant dans un boitier rigide perméable au rayonnement optique.

Dans le cas des disques optiques, le boitier de protection joue généralement le rôle de support de la couche mince qu'il a pour mission de protéger. Comme ce boitier présente une dimension radiale sensiblement plus importante que ses autres dimensions, les pièces qui le composent doivent être assemblées de façon à éviter toute perte de planéité du porte couche. En effet, pour inscrire ou lire des données, il faut explorer la couche sensible avec une tache lumineuse extrèmement ténue que l'on obtient au voisinage immédiat du point de focalisation d'un faisceau lumineux présentant une ouverture angulaire importante. Pour réaliser l'exposition optique d'une couche sensible plane, le disque optique est centré sur une broche animée d'un movement rotatif d'axe perpendiculaire à la couche et le faisceau d'écriture ou de lecture est déplacé radialement, afin de décrire une piste. Un bon suivi de piste implique que le point de convergence du rayonnement soit confondu avec la surface de la couche, d'où la nécessité de prévoir un maintien de focalisation par asservissement. Les défauts de planéité de la couche sensible doivent être pris en compte par l'asservissement de focalisation et sont les plus souvent directement liés aux déformations du boitier constituant le disque optique puisque la couche tend à épouser la forme de cette enveloppe protectrice. Lorsqu'un boitier de disque optique est constitué par l'assemblage en superposition de duex flasques circulaires, avec comme élément de liaison un cordon de soudure circulaire, la structure globale est le siège de tensions mécaniques résiduelles dûes au retrait de la matière fondue au cours de la soudure. Les tensions peuvent compromettre la planéité du flasque porte-couche à un point tel que le voilement du disque optique et/ou le flambage de sa structure rendent impossible le maintien de la focalisation par suite d'ondulations en hauteur qui affectent le périmètre circulaire en cours d'exploration. Théoriquement, l'effet de frette d'un cordon de soudure sur une structure présentant une symétrie de révolution devrait se traduire par une incurvation purement radiale du porte couche de sorte que chaque élément de piste circulaire reste situé dans un plan orthogonal à l'axe de rotation. Une telle incurvation modérée en forme de cloche peut être prise en compte par l'asservissement de focalisation.

En pratique, cette planéité circonférentielle laisse à désirer même si l'on prend soin de réunir pièces présentant toutes les caractéristiques élastiques et géométriques désirables, car la déformation en cloche peut dépasser l'amplitude permise par le système de lecture.

Dans une demande de brevet déposée en France sous le numéro 8207251, (FR—A—2525795), on a décrit un procédé de fabrication d'un disque optique protégé qui consiste à assembler les pièces en matériau thermoplastique constitutives du boitier par soudure. L'apport de chaleur nécessaire à cette soudure est réalisé par application de vibrations ultrasonores provoquant la fusion du matériau thermoplastiques dans plusieurs zones annulaires concentriques de faible largeur radiale, afin d'aboutir à une jonction par cordons de soudure multiples. L'amélioration des qualités de planéité d'un disque obtenue par ce procédé réside dans le fait qu'une jonction par cordons de soujure multiples peut offrir la même résistance à l'écartement des pièces qu'une jonction par cordon de soudure unique avec des forces circonférentielles moindres du fait qu'elles sont proportionnelles à la section de matière fondue. Ainsi, une soudure produisant un joint double porte sur une quantité de matière fondue moitié moindre que celle mise en oeuvre pour former un cordon unique deux fois plus large et deux fois plus profond. La réalisation d'un cordon de soudure avec apport de chaleur par ultrasons comporte une étape préparatoire qui consiste à prévoir sur l'une des faces à joindre une aspérité pointue qui sert à concentrer selon une ligne circulaire le foyer thermique qui donne naissance au cordon de soudure. L'aplatissement de cette aspérité pendant l'opération de soudure est un paramètre relativement difficile à contrôler, ce qui explique un manque de régularité circonférentielle du cordon de soudure, même si sa localisation radiale est mieux définie qu'en l'absence d'une telle aspérité. En outre, l'excédent de matière que consistue l'aspérité est pincé par les surfaces plates qui l'encadrent en laissant subsister un interstice de forme ténue propice à la concentration des contraintes mécaniques. On voit donc que la préparation des faces à joindre par la préformation d'aspérités circonférentielles laisse subsister une maîtrise incomplète de la forme finale du cordon de soudure et des contraintes résiduelles qu'il engendre.

En vue de pallier cet inconvénient, l'invention propose de façonner les faces à joindre avec une préforme dont le profil en creux contribue à assurer une meilleure délimitation du cordon de soudure et à amoindrir sa raideur circonférentielle par une désolidarisation radiale rendant les phénomènes de retrait moins contraignants pour le disque optique. Cette forme mieux adaptée consiste en un préformage des faces à joindre par deux sillons circulaires d'encadrement de l'aspérité pointue qui donne naissance au cordon de soudure lors de la fusion localisée par application d'ultrasons.

L'invention a pour objet un procédé de fabrication par soudage d'un suivant la revendication 1, et un disque suivant la revendication 1. Il est bien connus d'applique des sillons encadrant ils zones à souder dans des procedures du soudage (Machine Design, 26 décembre 1974 p. 42—44).

L'invention sera mieux comprise au moyen de la description ci-après et des figures annexées parmi lesquelles:

La figure 1 illustre le processus d'assemblage par soudure d'un boitier de disque optique.

Les figures 2 à 4 sont des vues isométriques sectorielles d'un boitier de disque optique selon l'état de la technique.

Les figures 5 à 7 sont des figures explicatives.

Les figures 8 à 9 illustrent le profile des préformes selon l'invention et la structure du cordon de soudure qui en découle.

La figure 10 est une figure explicative.

Les figures 11 à 13 sont des vues isométriques sectorielles d'un boitier de disque optique selon l'invention.

Les figures 14 à 16 sont des vues en coupe partielle de variantes de préformes selon l'invention.

La fabrication de disques optiques est particulièrement illustrative du domaine de l'invention, car les défauts de planéité acceptables dans ce type d'application sont tels qu'il faut porter une attention toute particulière aux effets des tensions résiduelles des cordons de soudure. Dans la description qui va suivre, il est question de boîtiers formés de pièces en matériau thermoplastique réunies par soudure.

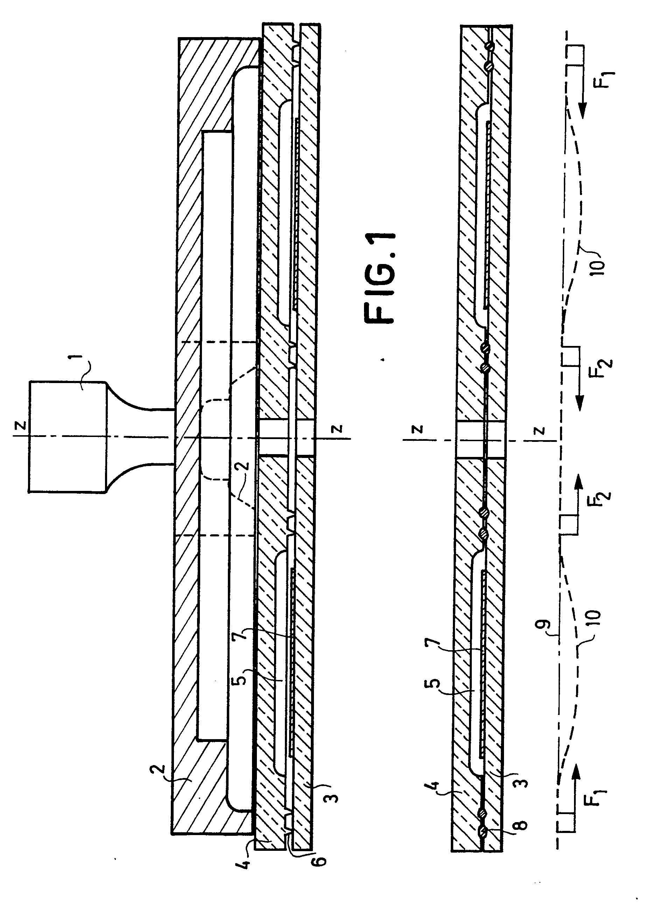

Dans la partie supérieure de la figure 1, on a représenté par un coupe méridienne la technique d'assemblage par soudure d'un boitier en deux parties qui consitue un disque optique protégé. Le boitier du disque se présente sous la forme d'une enveloppe en matériau thermoplastique délimitant une chambre interne 5 qui renferme une couche 7 conçue pour emmagasiner des données par inscription optique. La lecture optique peut se faire sans qu'il soit obligatoirement nécessaire de prévoir un processus chimique de développement. Le scellement du boitier peut donc intervenir après dépôt d'une couche 7 vierge de toute information pourvu que l'un des flasques 3 et 4 qui composent celui-ci soit perméable aux rayonnements optiques d'écriture et de lecture. De tels boitiers peuvent comporter plus de deux parties, par exemple, on peut envisager d'empiler trois plaques espacées par des entretoises pour matérialiser un boitier à deux chambres superposées qui contiennent chacune une couche sensible.

Quelle que soit la structure adoptée, le problème posé est de conserver le mieux possible la planéité de la couche sensible après l'assemblage par soudure d'au moins deux pièces circulaires d'un boitier. L'assemblage par soudure de matériaux thermoplastiques s'avère beaucoup plus avantageux que l'assemblage par collage. De plus, la technique d'échauffement par ultrasons offre toutes les garanties d'efficacité et de localisation précise des cordons de soudure.

Dans la partie supérieure de la figure 1 on a donc représenté au dessus du flasque 4 un organe de soudure par ultrasons qui comporte un générateur 1 qui fait vibrer une pièce annulaire 2. Cette pièce annulaire canalise des vibrations ultrasonores produites par le générateur 1 et les font pénétrer par contact dans la matière du flasque 4. Du fait de la plasticité, le matériau thermoplastique soumis à ces vibrations de fréquence élevée s'échauffe en donnant lieu à une soudure. Pour que les vibrations ultrasonores puissent se transmettre au flasque inférieur 3, on a créé une préforme 6 dans la face du flasque 4 qui soit devenir jointive avec la face du flasque 3 sur laquelle on a 4 déposé la couche sensible 7. Cette préforme consiste en une ou plusieurs aspérités jointives 6 à agencement circulaire. On se référera utilement à la demande de brevet mentionnée ci-dessus qui donne une description détaillée de ce type de préforme. La partie supérieure de la figure 1 représente l'empilage des pièces juste avant que l'on applique les ultrasons, tandis que le milieu de la figure 1 représente le boitier du disque optique une fois la soudure réalisée. On observe que les flasques 3 et 4 se sont rapprochés grâce à une compression de direction parallèle à l'axe Z qui est l'axe de rotation du disque. Le rapprochement est rendu possible par la fusion de la préforme 6 qui à servi de moyen localisateur des cordons de soudure 8.

La matière en fusion en se refroidissant dans un environnement rigide subit un retrait accompagné du développement de tensions mécaniques résiduelles. Les tensions soumettent les cordons de soudure 8 à des efforts de dilatation qui sont équilibrés par des efforts de contraction exercés sur le voisinage immédiat de la périphérie des cordons de soudure 8. Il résulte donc des phénomènes de retrait apparaissant au niveau des cordons de soudre 8, une contrainte de frettage qui tend à comprimer radialement les flasques 4 et 3. Chaque cordon de soudure se comporte donc comme une ceinture serrante qui peut atteindre dun diamètre proche de 30 cm. Sur la partie inférieure de la figure 1, on a représenté par une droite un trait mixte 9 la coupe méridienne de la surface de la couche 7 avant l'exécution de la soudure et en pointillé la coupe méridienne 10 après soudure. Celle-ci présente une incurvation qui a pour cause les forces F1 et F2 se développant par le retrait de la matière des cordons de soudure 8.

Bien que le décalage entre les traces 9 et 10 soit considérablement exagéré sur la figure 1, il est néanmoins suffisant en pratique pour rendre le disque inutilisable, car l'asservissement de focalisation ne parvient pas à compenser des écarts de mise au point du faisceau d'écriture ou de suivi. Le défaut le plus inacceptable est le voilement du disque caractérisé par une ligne 10 qui change de forme suivant le coupe méridienne choisie. Le voilement du disque peut résulter d'un manque d'uniformité dans la répartition circonférentielle des tensions résiduelles, mais il peut également provenir de l'instablité liée au flambage d'une plaque élastique comprimée radialement.

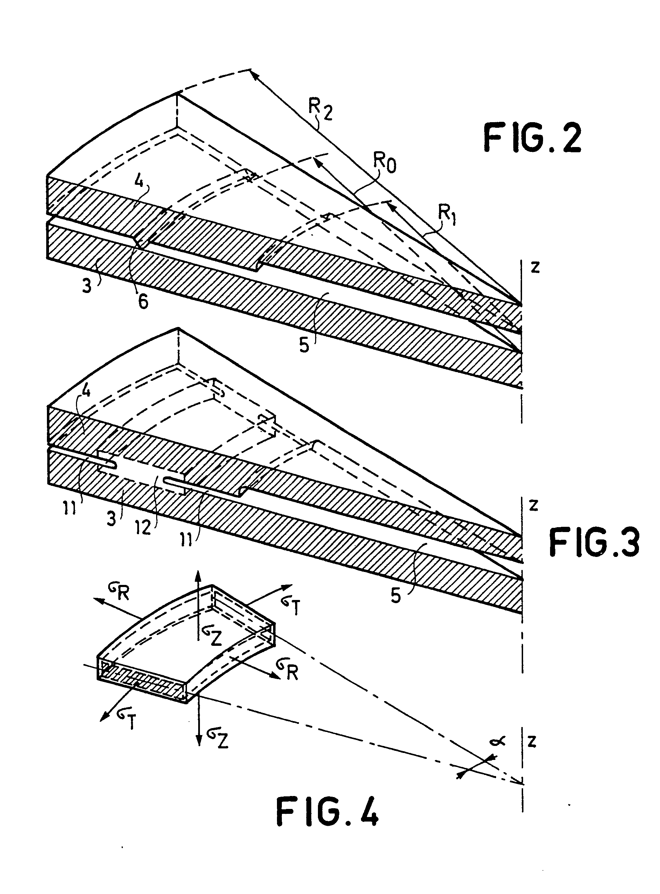

Pour mieux faire comprendre l'invention, on a représenté à la figure 2 un secteur de boitier ayant une chambre annulaire 5 qui s'étend radialements jusqu'à la distance R1 de l'axe de rotation Z. La jonction par soudure des flasques 3 et 4 a lieu dans une zone annulaire qui s'étend entre les rayons R1 et R2; cette zone est matérialisée par un rebord du flasque 4. Pour assurer la bonne transmission des vibrations ultrasonores entre les flasques 3 et 4, il est prévu à la distance Ro de l'axe Z une préforme de configuration circulaireᴶ dont le profil présente l'aspect d'une aspérité pointue. Cette disposition connue produit un cordon de soudure 12 tel qu'illustré sur la figure 3 par une zone fondue dont la section a été laissée libre de hachures. Le rapprochement des flasques 3 et 4 au cours de la soudure et la fusion de la préforme 6 ont laissé subsister deux étranglements 11 au fond desquels de produisent de fortes concentrations de contraintes. La hauteur du joint de soudure et celle des étranglements sont fortement exagérées sur la figure 3. L'étalement de la matière fondue entre les flasques 3 et 4 est difficile à contrôler avec précision, mais il est clair que les flasques 3 et 4 ne peuvent entrer en contact.

Pour comprendre le mécanisme d'apparition de tensions résiduelles par retrait, on a illustré sur la figure 4 un secteur d'ouverture & du cordon de soudure 12. Le volume en trait plein délimite la frontière qui sépare la matière fondue de l'environnement rigide à l'instant où elle commence à se solidifier. Le volume en pointillé dont la section 13 a été hachurée représente le noyau complètement refroidi lorsqu'on suppose qu'il est libre de se contracter à l'intérieur du volume enveloppe en trait plein. Sachant que le matériau thermoplastique, par exemple le polymétacrylate de méthyle, présente un coefficient de dilatation thermique de l'ordre de 7 à $9.10^{-5}$/°C et que la température à laquelle il retrouve sa résistance élastique est comprise entre 90°C et 130°C, on peut estimer le retrait linéaire $e_{th}$ entre ces deux volumes enveloppes à $10^{-3}$ pour un retour à la température ambiante. Bien entendu, la contraction du cordon de soudure ne peut pas laisser de vide et on est amené àconsidérer que la matière qui le constitue va subir un état de tension apparenté à la traction simple en trois dimensions. De façon connue, on a représenté sur la figure 4 des tensions normales aux facettes du volume enveloppe élémentaire 13 qui naissent du fait du retrait et de l'effet extenseur de milieu rigide formant l'entourage du cordon. La tension radiale est désignée par $\sigma_R$, la tension $\sigma_Z$ est parallèle à l'axe Z et la tension $\sigma_T$ est la tension circonférentielle de frettage. Naturellement, l'entourage du cordon de soudure n'est pas infiniment rigidé et, pour donner naissance aux tensions $\sigma_R$, $\sigma_Z$ et $\sigma_T$, il s'est également déformé. Le schéma de la figure 4 est incomplet, puisqu'il laisse de côté les tensions tangentielles, mais il donne un bon aperçu des phénomènes de tension résiduelle. La tension $\sigma_Z$ est faible, car les étranglements 11 font que les flasques 3 et 4 ne s'opposent pas au retrait dans la direction de l'axe Z. Par contre, les tensions $\sigma_R$ et $\sigma_T$ justifient l'effort de ceinturage que produit sur les flasques 3 et 4 le retrait du cordon de soudure 12. Il est utile de rappeler ici les formules qui régissent la traction simple dans trois directions d'un corps élastique:

$$\left\{ \begin{array}{l} e_R = 1/E\ [\sigma_R - \gamma(\sigma_T + \sigma_Z)] \\[2mm] e_T = 1/E\ [\sigma_T - \gamma(\sigma_R + \gamma_Z)] \\[2mm] e_Z = 1/E\ [\sigma_Z - \gamma\ (\sigma_R + \gamma_T)] \end{array} \right.$$

où E est le module de YOUNG et $\gamma$ le coefficient de POISSON du matériau élastique subissant cette traction. Les premiers membres de ces relations sont des allongements proportionnels $e_R$, $e_T$ et $e_Z$ respectivement dans les directions radiale, circonférentielle et en épaisseur selon Z.

Compte tenu de la grande rigidé de l'entourage du cordon de soudure, on peut admettre que les allongements $e_T$ et $e_R$ compensent le retrait linéaire $e_{th}$, ce qui, compte tenu des hypothèses précédentes conduit aux formules simplifiées:

$$\left\{ \begin{array}{l} e_{th} = 1/E\ (\sigma_R - \gamma\sigma_T) \\[2mm] e_{th} = 1/E\ (\sigma_T - \gamma\sigma_R) \\[2mm] e_Z = -\gamma/E\ (\sigma_R + \gamma_T) \end{array} \right.$$

Sachant que $\gamma$ est obligatoirement au plus égal à 0,5, on voit que les tensions $\sigma_R$ et $\sigma_T$ sont égales à

$$\frac{E.\,eth}{1-\gamma}$$

Si le cordon de soudure 12 n'avait été soumis qu'à une traction simple dans la direction circonférentielle, on aurait obtenu les tensions:

$$\sigma_Z = 0,\ \sigma_R = 0\ \text{et}\ \sigma_T = E.e_{th}$$

4

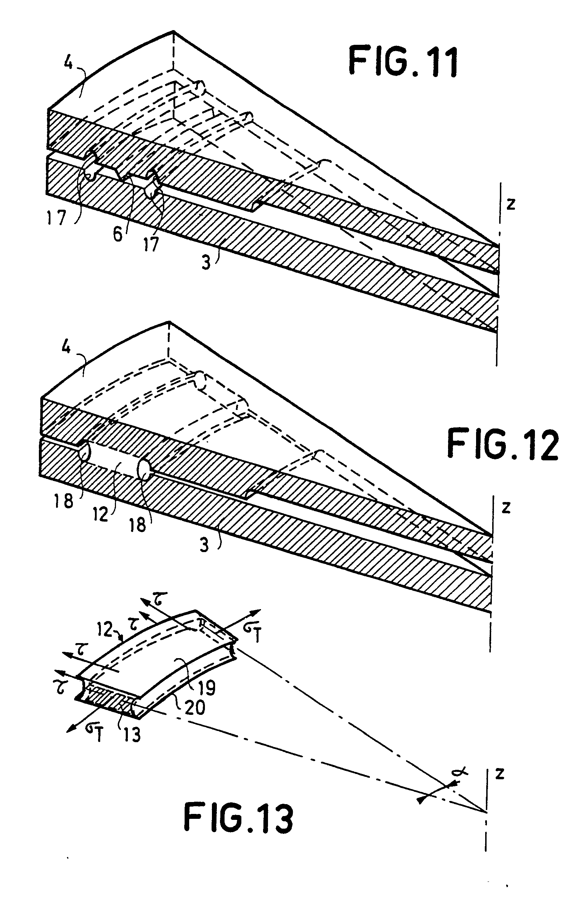

L'effet de ceinturage par le cordon de soudure 12 est essentiellement représenté par la tension $\sigma_T$. En se reportant à la figure 10, on voit que l'équilibre mécanique d'un demi cordon de soudure 12 de rayon R vu dans le plan du disque optique est donné par une force N à chaque extrémité qui correspond à la tension circonférentielle

$$\sigma_T = \frac{N}{e.h}$$

où e est l'épaisseur radiale du corfon et h sa hauteur selon Z. Ces forces sont équilibrées par l'action d'une pression radiale p agissant intérieurement sur le cordon, pression qui est dûe à la réaction des flasques 3 et 4 à la déformation qu'ils encaissent.

L'étude de cet équilibre conduit à la relation: N=p.R.h d'où l'on tire facilement:

$$p = \frac{e.\sigma_T}{R}$$

Les flasques 3 et 4 sont d'autant moins déformés que p est faible, ce qui revient à diminuer e et/ou $\sigma_T$.

Pratiquement, avec un coefficient de Poisson de l'ordre de 0,3, la suppression des tensions $\sigma_R$ permet de diminuer de 30% l'importance de la tension $\sigma_T$. Le maintien de e à une valeur constante et si possible faible à aussi une incidence favorable sur les phénomènes de voilement à combattre.

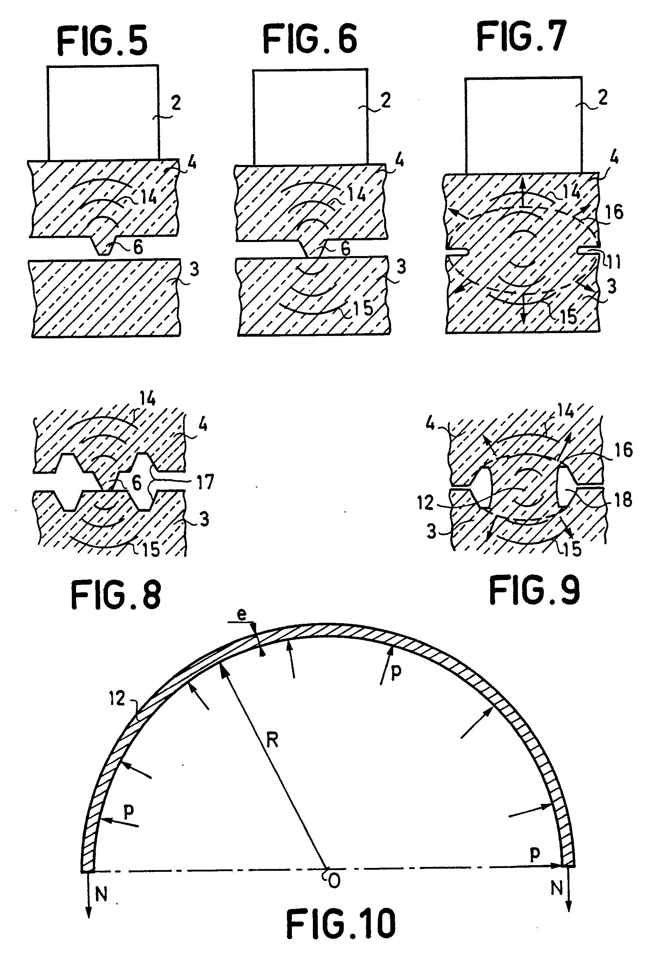

La tendance qui se dégage de l'interprétation précédente est encore plus nette lorsqu'on considère la situation illustrée par les figures 5 à 7 qui correspondent à la résistance d'une soudure par ultrasons effectuée conformément à l'état de la technique.

La figure 5 représente les flasques 3 et 4 d'un boitier avec une préforme 6 qui forme une projection sur la face intérieure du flasque 4. L'outil de soudure par ultrasons 12 est appliqué contre la face externe du flasque 4 et génère des vibrations ultrasonores dont les fronts d'ondes 14 convergent vers l'aspérité 6. La figure 6 montre que lorsque la pointe de l'aspérité 6 vient en contact avec la face interne du flasque 3, les vibrations peuvent se répandre dans le flasque 3 avec des fronts d'ondes divergents 15. L'échauffement par ultrasons sera maximal au voisinage du foyer, c'est-à-dire à l'emplacement de l'aspérité 6 et de son contact avec le flasque 3. La figure 7 représente le cordon de soudure constitué à l'intérieur d'un contour enveloppe 16 dont la forme élliptique est plus réaliste que celle illustrée précédemment. Les flèches centrifuges représentent le flux de chaleur qui assure le retour à l'état solide du noyau central fondu. On note sur la figure 7 que l'aspérité 6 est complètement noyée dans la zone du cordon de soudure et que les étranglements 11 qui existaient sur la figure 6 de chaque côté 5 de l'aspérité 6 ont décru ne hauteur et se sont éloignés, ce qui correspond à un élargissement radial difficile à bien contrôler. L'étendue du cordon de soudure est partiellement contrôlée par la présence de l'aspérité 6, par la focalisation des vibrations et par leur temps d'application. On a représenté sur la figure 8 la préforme modifiée qui fait l'objet de la présente invention. Il s'agit d'un exemple de réalisation dans lequel la différence par rapport à la figure 6 consiste à réaliser l'encadrement de l'aspérité 6 par une paire de sillons 17 formant des entailles de la face interne du flasque 4 et par une autre paire de sillons 17 formant des entailles de la face interne du flasque 3. La préforme du flasque 4 présente un profil en creux et en saillie et une configuration circulaire; celle du flasque 3 se contente d'un profil en creux avec la même configuration circulaire. Sur la figure 9 qui représente l'étape finale de la soudure, on voit que les sillons 17 ont joué un rôle délimitateur composite. En effet, on peut apprécier sur la figure 8 que les sillons 17 ont une action délimitatrice sur l'étendue du rayonnement vibratoire 14—15, qui sert à échauffer la matière thermoplastique. A cette action s'ajoute une isolation thermique radiale du flux de chaleur qui tend à gagner le voisinage de la zone de soudure. On voit sur la figure 9 que cette action délimitatrice se poursuit lors de la formation du cordon de soudure, car des évidements 18 subsistent radialement à l'emplacement des sillons 17. Comme le flux de chaleur ne peut pas s'évacuer latéralement, le cordon de soudure 12 forme un pontage des flasques 3 et 4. Le rapprochement des flasques 3 et 4 peut aller jusqu'au contact franc des faces internes de jonction, car l'excédent de matière contenu dans la saillie 6 trouve aisément sa place sans étalement marqué du cordon et sans former d'étranglement. Les figures 11 à 13 donnent une illustration en trois dimensions d'un secteur de boitier pour disque optique réalisé et soudé conformément à l'invention. Les caractéristiques améliorées de la préforme sont faciles à saisir lorsqu'on compare les figures 11 à 13 à leurs homologues 2 à 4. Dans toutes ces figures, les mêmes références désignent les mêmes éléments que dans les figures précédentes. En ce qui concerne la figure 13, on a représenté un secteur d'ouverture α du cordon de soudure 12 selon l'invention. On voit que les tensions normales $\sigma_R$ n'existent plus du fait de l'existence des évidements 18. Lors de son retrait, le cordon de soudure tend à se rapprocher de l'axe Z, mais il en est empêché par des tensions tangentielles σ qui s'exercent sur les faces perpendiculaires à l'axe Z. L'équilibre du cordon de soudure entraîne sa déformation par cisaillement, mais la tension circonférentielle $\sigma_T$ est amoindrie puisque le cordon de soudure est plus libre de se déformer, étant donné qu'il est dépourvu d'attache radiale avec l'entourage des flasques 3 et 4.

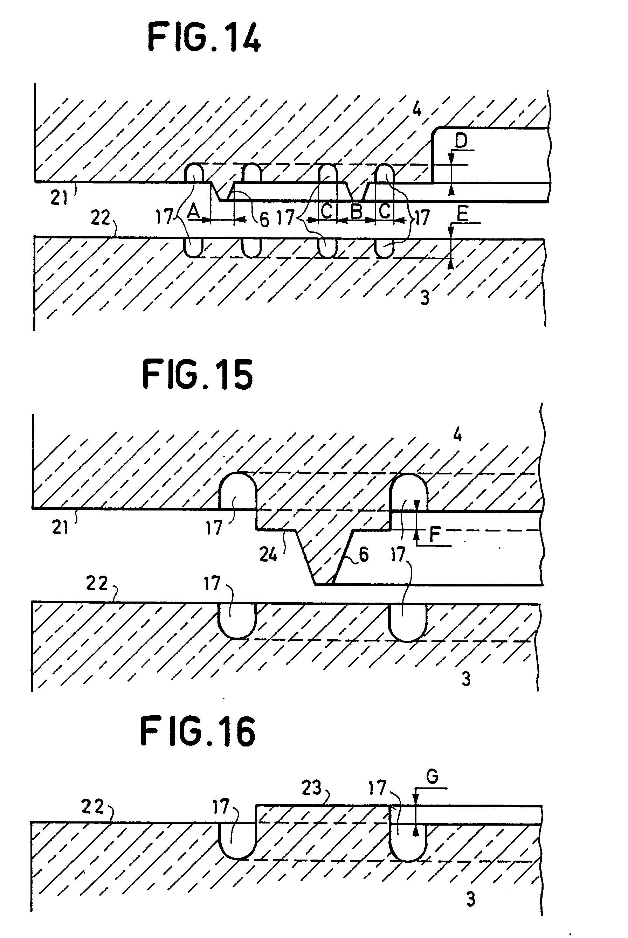

La figure 14 est une vue de coupe partielle d'un couple de préformes permettant de réunir deux

EP 0 168 750 B1

flasques 3 et 4 par deux cordons de soudure concentriques. La préforme réalisée sur la face de jonction 21 du flasque 4 comporte deux aspérités 6 de largeur à la base A, égale par exemple à 0,3 mm. Chaque aspérité 6 a une hauteur du même ordre que sa largeur A et est encadrée par deux sillons 17 de profondeur D égale par exemple à 0,3 mm. Chaque sillon 17 présente une largeur C n'excédant pas 0,3 mm dans l'exemple choisi et la plage encadrée par deux sillons 17 a une largeur B de l'ordre de 0,5 mm. La préforme de la face de jonction 22 du flasque 3 a les mêmes mensurations, mais elle ne comporte pas d'aspérité 6. Ainsi, l'aspérité 6 n'est prévue que sur l'une des faces de jonction 21 et 22, ce qui permet une juxtaposition plus facile. Bien entendu, rien ne s'oppose à révoir une aspérité 6 sur la face 21 et à réaliser l'autre aspérité 6 sur la face 22 puisqu'elles sont situées à des rayons différents du disque. La profondeur E des sillons prévus sur la face 22 est de préférence égale à D, mais on pourrait déjà abaisser les contraintes résiduelles en conservant une face 22 entièrement lisse, ce qui simplifie la fabrication du flasque 3.

Avec la disposition de préforme de la figure 14, les faces 21 et 22 peuvent établir un contact franc, car l'excédent de matière constitué par les aspérités 6 peut être accepté par les sillons 17. Lorsque les flasques 3 et 4 sont soumis à un couple tendant à faire tourner les faces 21 et 22 l'une par rapport à l'autre, l'appui étant plus vaste, on dispose de forces de maintien bien réparties, mais lors du retrait des cordons de soudure, une tension $\sigma_z$ se développe puisque la contraction de la matière fondue est contrariée par l'appui franc des faces 21 et 22. Quand la résistance à l'arrachement des flasques soudés peut être complètement assurée par les cordons de soudure, on peut laisser subsister un interstice entre les faces 21 et 22, par exemple en dosant la force de compression des flasques pendant l'opération de soudure. Cependant, pour régler plus aisément un tel rapprochement incomplet, on peut modifier la préforme comme indiqué sur les figures 15 et 16.

Sur la figure 15, on voit qu'un épaulement 24 de hauteur F a été prévu entre les sillons 17 et l'aspérité 6. La hauteur F est comprise entre 0,1 et 0,3 mm pour assurer l'espacement désiré. L'étendue B de l'épaulement, c'est-à-dire la distance radiale de la saillie au dessous du plan de la face 21 est comprise entre 1,3 et 3 fois la largeur à la base de l'aspérité 6. Cette étendue réalise un compromis, car trop faible elle n'empêche pas les faces de devenir jointives puisqu'elle fond avec l'aspérité 6 et trop forte elle empêche la fusion d'atteindre une fraction substantielle de la masse encadrée par les sillons 17. Comme le montre la figure 15, la préforme de la face 22 du flasque 3 ne subit pas de changement par rapport à la disposition de la figure 14.

La figure 16 montre que l'épaulement prévu pour s'opposer au contact franc des faces 21 et 22 peut également être prévu sur la face 22 sous la forme d'une saillie 23 de hauteur G. Cette saillie 23 peut tenir lieu de celle qui est prévue sur la face 21 illustrée à la figure 15, mais elle peut aussi venir en complément.

Dans ce qui précède, on a décrit une technique de soudure de pièces en matériau thermoplastique qui consiste à délimiter les cordons de soudure par des dégagements dont la profondeur se situe entre 0,1 et 0,4 mm et dont l'écartement est tel que la plus grande partie de la matière située entre eux soit effectivement fondue. Cet écartement est typiquement comprise entre 0,3 et 0,6 mm et la largeur de chaque dégagement est comparable à leur profondeur. La section méridienne du cordon de soudure peut être comprise entre 0,05 et 0,50 mm². La subdivision d'un cordon de soudure unique en plusieurs cordons concentriques peut se combiner de façon avantageuse avec les dispositions énumérées ci-dessus.

**Revendications**

1. Procédé de fabrication par soudage d'un disque optique protégé à éléments soudés comportant un boîtier enveloppe de diamètre supérieur à ses autres dimensions dont les pièces jointives (3, 4) sont réalisées en matériau thermoplastique et sont réunies l'une à l'autre par au moins un cordon circulaire de soudure (12), ce cordon circulaire occupant partiellement une zone de jonction plane annulaire (21, 22) perpendiculaire à l'axe de rotation (2) du disque qui borde radialement une chambre intérieure (5) contenant la couche porte-information (7), caractérisé en ce que la partie fusible (6, 23, 24) d'une pièce (4) donnant naissance au cordon de soudure (12) présente au moins une saillie pointue (6) à agencement circulaire et encadrée par une paire de sillons, la pièce opposée (3) est pourvue d'une paire de sillons (17) continus de dégagement qui encadrent la zone à souder, et en ce que le soudage est effectué par vibrations ultrasonores de façon telle que la saillie pointue soit l'émettrice du rayonnement les sillons (17) et la saillie (16) constituant une préforme de soudure une au moins une surface de jonction (21, 22) des pièces.

2. Procédé selon la revendication 1, caractérisé en ce que les sillons (17) de la pièce (3) opposée à la saillie encadrent une zone plate (23) destinée à servir d'assise à ladite saillie pointue (6).

3. Procédé selon la revendication 2, caractérisé en ce que ladite zone plate (23) forme une saillie dans la zone de jonction plane annulaire (22).

4. Procédé selon l'une quelconque des revendications 1 à 3, caractérisé en ce que ladite saillie est portée par un épaulement (24) situé entre lesdits sillons de dégagement (17) et faisant saillie par rapport à la zone de jonction plane annulaire (21).

5. Procédé selon l'une quelconque des revendications précédentes, caractérisé en ce qu'au moins un cordon de soudure (12) borde extérieurement ou intérieurement ladite chambre intérieure (5) et en ce que l'une au moins desdites pièces jointives (3, 4) et un flasque comportent une partie en cuvette formant la partie inférieure de ladite chambre.

6

6. Procédé selon l'une quelconque des revendications 1 à 5, caractérisé en ce que la profondeur desdits sillons de dégagement est comprise entre 0,1 et 0,4 mm.

7. Procédé selon la revendication 6, caractérisé en ce que l'écartement des sillons de dégagement d'une même paire est compris entre 0,3 et 0,6 mm.

8. Procédé selon l'une quelconque des revendications 3 et 4, caractérisé en ce que la hauteur de ladite saillie est comprise entre 0,1 et 0,3 mm.

9. Procédé selon la revendication 7, caractérisé en ce que ledit écartement est compris entre 1,3 et 3 fois la largeur à la base de ladite saillie (6).

10. Procédé selon l'une quelconque des revendications précédentes, caractérisé en ce que ledit matériau thermoplastique est la polymétacrylate de méthyle.

11. Disque optique obtenu par le procédé selon l'une quelconque des revendications précédentes, caractérisé en ce qu'il présente des évidements (18) aux extrémités radiales du cordon circulaire de soudure (12).

## Patentansprüche

1. Verfahren zum Herstellen einer geschützten optischen Platte mit verschweißten Elementen durch Verschweißen, mit einem umhüllenden Gehäuse, dessen Durchmesser größer als sein anderen Abmessungen ist und dessen aneinandergefügten Teile (3, 4) aus einem thermoplastischen Material bestehen und miteinander durch wenigstens eine kreisförmige Schweißnaht (12) verbunden sind, wobei diese Naht teilweise eine ringförmige, ebene Verbindungszone (21, 22) einnimmt, die zur Rotationsachse (2) der Platte senkrecht ist, die eine Innenkammer (5) radial begrenzt, welche die Informationsträger-Schicht (7) beinhaltet, dadurch gekennzeichnet, daß der schmelzbare Bereich (6, 23, 24) eines Teils (4), das zur Schweißnaht (12) wird, wenigstens einen spitzen Vorsprung (6) von kreisförmiger Anordnung und von einem Rillenpaar umgeben aufweist, der gegenüberliegenden Teil (3) mit einem durchgehenden Ableitungs-Rillenpaar (17) versehen ist, die die zu schweißende Zone einrahmen, und daß das Schweißen durch Ultraschall-Schwingungen in solcher Weise erfolgt, daß der spitze Vorsprung die Strahlung aussendet, wobei die Rillen (17) sowie der Vorsprung (6) eine Schweißvorform auf wenigstens einer Fläche zum Verbinden (21, 22) der Teile bilden.

2. Verfahren nach Anspruch 1, dadurch gekennzeichnet, daß die Rillen (17) des Teils (3), das dem Vorsprung gegenüberliegt, eine ebene Zone (23) einrahmen, die dazu bestimmt ist, als Abstützung für diesen spitzen Vorsprung (6) zu dienen.

3. Verfahren nach Anspruch 2, dadurch gekennzeichnet, daß die genannte ebene Zone (23) einen Vorsprung in der ebenen, ringförmigen Verbindungszone (22) bildet.

4. Verfahren nach einem der Ansprüche 1 bis 3, dadurch gekennzeichnet, daß der genannte Vorsprung durch eine Schulter (24) getragen wird, die zwischen den genannten Ableitungs-Rillen (17) gelegen ist und in bezug auf die ebene, ringförmige Verbindungszone (21) herausragt.

5. Verfahren nach einem der vorstehenden Ansprüche, dadurch gekennzeichnet, daß wenigstens eine Schweißnaht (12) äußerlich oder innerlich die genannte Innenkammer (5) begrenzt und daß wenigstens eines der genannten aneinandergrenzenden Teile (3, 4) sowie ein Flasch einen napfförmigen Teil, der den unteren Teil der Kammer bildet, umfassen.

6. Verfahren nach einem der Ansprüche 1 bis 5, dadurch gekennzeichnet, daß die Tiefe der genannten Ableitungs-Rillen zwischen 0,1 und 0,4 mm beträgt.

7. Verfahren nach Anspruch 6, dadurch gekennzeichnet, daß der Abstand zwischen den Ableitungs-Rillen eines selben Paares zwischen 0,3 und 0,5 mm beträgt.

8. Verfahren nach einem der Ansprüche 3 und 4, dadurch gekennzeichnet, daß die Höhe des genannten Vorsprungs zwischen 0,1 und 0,3 mm beträgt.

9. Verfahren nach Anspruch 7, dadurch gekennzeichnet, daß der genannte Abstand zwischen 1,3 und 3 Mal die Breite an der Basis des genannten Vorsprungs beträgt.

10. Verfahren nach einem der vorstehenden Ansprüche, dadurch gekennzeichnet, daß das genannte thermoplastische Material ein Polymethakrylatsäuremethylester ist.

11. Optische Platte, die durch das Verfahren gemäß einem der vorstehenden Ansprüche erhalten ist, dadurch gekennzeichnet, daß sie an den Radialenden der kreisförmigen Schweißnaht (12) Aussparungen (18) aufweist.

## Claims

1. A method for the manufacture by welding of a protected optical disk having welded elements, comprising an enveloping enclosure with a diameter in excess of its other dimensions and whose joined members (3 and 4) are produced on a thermoplastic material and are united together by at least one circular weldment belt (12), said circular belt partially occupying an annular planar junction zone (21 and 22) perpendicular to the axis (2) of rotation of the disk which radially borders an interior chamber (5) containing the information bearing layer (7), characterized in that the fusible part (6, 23 and 24) of a member (4) giving rise to the weldment belt (12) presents at least one pointed projection (6) having a circular arrangement and encircled by a pair of grooves, the opposite member (3) is provided with a pair of continuous disengaging grooves (17) which encircle the zone to be welded, and in that the welding operation is performed by ultrasonic vibrations in such a manner that the pointed projection is the part emitting the radiation, the grooves (17) and the projection (6) constituting a weld preforming means on at least one junction surface (21 and 22) of the members.

2. The method as claimed in Claim 1, characterized in that the grooves (17) of the member (3) opposite to the projection encircle a flat zone (23) destined to serve as a rest for the said pointed projection (6).

3. The method as claimed in Claim 2, characterized in that the said flat zone (23) forms a projection in the annular planar junction zone (22).

4. The method as claimed in any one of the preceding Claims 1 through 3, characterized in that the said projection is borne by a shoulder (24) situated between the said disengaging grooves (17) and projecting in relation to the annular planar junction zone (21).

5. The method as claimed in any one of the preceding Claims, characterised in that the interior or in the exterior the at least one weldment belt (12) borders the said interior chamber (5) and in that at least one of the said jointing members (3 and 4) and a flange comprise a bowl-like part forming the interior part of the said chamber.

6. The method as claimed in any one of the preceding Claims 1 through 5, characterized in that the depth of the said disengaging grooves is between 0.1 and 0.4 mm.

7. The method as claimed in Claim 6, characterized in that the spacing of the disengaging grooves of a given pair is comprised between 0.3 and 0.6 mm.

8. The method as claimed in Claim 7, characterized in that said spacing is comprised between 0.1 and 0.3 mm.

9. The method as claimed in Claim 7, characterized in that the said spacing is comprised between 1.3 and 3 times the width of the base of the said projection (6).

10. The method as claimed in any one of the preceding Claims, characterized in that the said thermoplastic material is polymethylmethacrylate.

11. An optical disk produced by the method as claimed in any one of the preceding Claims, characterized in that the same presents hollows (18) at the radial ends of the circular weldment belt (12).

FIG.1

**FIG.2**

$R_2$

$R_0$

$R_1$

z

4

3

6

5

**FIG.3**

4

z

11

3

12

11

5

$\sigma_R$

$\sigma_T$

$\sigma_Z$

$\sigma_R$

$\sigma_T$

$\sigma_Z$

$\alpha$

z

**FIG.4**

# FIG.5

# FIG.6

# FIG.7

# FIG.8

# FIG.9

# FIG.10

# FIG.11

# FIG.12

# FIG.13

# FIG.14

# FIG.15

# FIG.16